# EUROPEAN PATENT APPLICATION

(11) **EP 3 754 443 A1**
(43) Date of publication of application: **23.12.2020**
(21) Application number: 19181861.6
(22) Date of filing: 21.06.2019
(51) Int. Cl.: G05B 19/418

(54) **METHOD FOR AUTOMATED TEXTILE PRODUCTION**

(71) Applicant: Soon Holding ApS, 1303 Copenhagen K (DK)
(72) Inventor: POULSEN, Trine Young Stofberg, 1303 Copenhagen K (DK)
(74) Representative: AWA Denmark A/S

(57) **Abstract**

The invention relates to a computer implemented method for generating instructions for automated textile production for use in a production facility comprising an automated textile cutter and an automated textile printer. The method comprises the steps of receiving one or more orders from one or more customers, the one or more orders each specifying one or more textile products comprising one or more sub-designs, where the one or more orders comprise at least a first parameter related to a textile roll of a plurality of textile rolls, and/or a second parameter indicating whether automatic cutting is to be used; and generating instructions for automated textile production for use in the production facility by aggregating one or more sub-designs, where the aggregation is performed based on the first parameter and/or the second parameter.

## Description

### FIELD

The invention relates to a computer implemented method for generating instructions for automated textile production for use in a production facility comprising an automated textile cutter and an automated textile printer, to a method for automated textile production using a production facility comprising an automated textile cutter and an automated textile printer comprising a textile roll, and a control unit, to a data structure for automated textile production, to a system for automated textile production comprising a production facility including an automated textile cutter and an automated textile printer, the system further comprising a processing unit, and to a textile product produced by using the method according to the invention.

### BACKGROUND

Textile production has historically always been an extensive process involving many manual steps performed by human beings, which are very time consuming, energy consuming, and labour consuming.

Many of the products and chemicals involved in textile production can also be harmful for the environment and human beings exposed to them. Textile production has also a big impact on the environment due to the large amounts of water needed for the traditional dyeing process.

In order to make the textile production more efficient, automated factories have been developed. Such factories allow for a fast and continuous textile production with minimal need for human beings interfering in the production. The production time for textile products can be reduced considerably because of the high degree of automation of these factories. By having all the machines together in one factory all the steps in the clothes production may be performed consecutively and result in less downtime in the production.

Such factories are used for the automatic production of different type of textile products such as apparels, clothes, table cloths, and bed linen.

In order to be cost effective and run effectively these factories have to yield huge amounts of textile products, and have as little downtime as possible.

When a customer places an order for a textile product, a minimum volume of the textile product is required to place the order. This minimum volume can for some customers having a low volume or for customers ordering test products for their upcoming new textile products require a lot of unnecessary resources. Many textile brands often have several rounds of test textile products also called sampling, which then end up with many specimens of old test textile products that are wasted. This may result in that the textile brands have less sampling runs because they cannot afford the production costs of several samplings. This can in turn result in a loss of quality because of a lower priority assignment to the textile product. The lack of flexibility of these automated factories result in that the small and medium sized textile brands are obliged to have less textile product variants but in higher volumes per textile product than what is demanded for by their customers. This combined with an increasing demand for speed-to-market means that brands are further obliged to renounce on quality.

### SUMMARY

It is therefore an object of the invention to provide a more flexible and optimized automated textile production. Another object of the invention is to improve the quality of automated textile production.

According to a first aspect of the present invention, these and further objects may be achieved by a computer implemented method for generating instructions for automated textile production for use in a production facility comprising an automated textile cutter and an automated textile printer, where the method comprises the steps of:
- receiving one or more orders from one or more customers, the one or more orders each specifying one or more textile products comprising one or more sub-designs, where the one or more orders comprise at least a first parameter related to a textile roll of a plurality of textile rolls, and/or a second parameter indicating whether automatic cutting is to be used;
- generating instructions for automated textile production for use in the production facility by aggregating one or more sub-designs, where the aggregation is performed based on the first parameter and/or the second parameter.

By having a method according to the first aspect of the invention a more efficient automated textile production may be achieved. An advantage of this is that instead of having a sequential production as in known solutions, where the orders are produced one after the other, a plurality of orders may be produced at the same time in a more flexible and effective way. A continuous production may thereby be possible without stopping the automatic production between each order or when a different textile roll is to be used. This may allow e.g. that a plurality of small orders e.g. orders comprising few textile products or sub-designs are aggregated on the same instructions based e.g. on whether the sub-designs are to be cut automatically, the textile colour of the sub-design, and/or the textile type of the sub-design.

Different orders having sub-designs with a common textile colour can thereby be aggregated in the same instructions. An advantage of this, is that the same textile roll can be used for different orders, whereby the textile roll does not need to be changed for every different textile product and order. The textile roll is loaded in the production facility e.g. in the automated textile printer and/or the automated textile cutter.

Examples of automated textile printers are e.g. the Kornit Digital model Presto, the Durst model Alpha190-32, or the D-gen model Teleios Hexa. Examples of automated textile cutters are e.g. the Zund model S3 L-1600, the Bullmer model Procut, or the Gerber Technologies model Paragon LX-series.

The textile roll may therefore provide or feed the above machines with textile sheet. The textile roll may comprise a sheet of textile rolled up around a supporting element to form a textile roll. The textile roll may e.g. be exchanged in the automated textile printer with another textile roll when the textile roll is empty or with a textile roll having a different textile type or a different textile colour. In general, only one textile roll may be loaded in the automated textile printer at the time, but in some production facilities a plurality of textile rolls may be loaded in the automated textile printer, so that the automated textile printer may choose between a plurality of textile rolls.

The production facility may also comprise a dryer to cure the textile print. The dryer is preferably placed after the automated textile printer such that the printed textile may be cured directly without stopping the textile production process. The production facility may also comprise an operator for monitoring the automated textile production and may perform some manual activities, such as starting an automated textile production process or turning on or off some of the machines in the production facility.

An order may comprise one or more textile products, e.g. one or more textile products such as tee-shirts, sweaters, pants, jackets, dresses etc. The wording textile product may also be understood as a finished textile product. Example of textile products are apparels, table cloths, curtains, and bed linen. The textile products comprise one or more sub-designs, where sub-designs also may be understood as pieces of textiles that together when assembled or sewed together form the textile product i.e. the finished textile product. This may for example be the sleeve, the back, the front, and the neck of a tee-shirt or sweater. For textile products such as apparels and clothes, the textile products usually comprise several sub-designs such as the above cited pieces. However, for textile products such as bed linen, table cloths, and curtains the textile products may comprise only a few sub-designs e.g. one, two, or five sub-designs. Thereby the textile products may comprise only one sub-design. An order may thereby comprise e.g. a plurality of textile products such as towels or curtains which only include one sub-design each. The towels or curtains from a same order may thereby be connected with connecting textile portions, thereby allowing to pick up or collect substantially all the towels or curtains of a same order in a single operation. The one or more orders from the one or more customers specifying the one or more textile products preferably specify in total a plurality of textile products e.g. at least 5, 10, 20, or 50 textile products. The plurality of textile product may be a quantity of the same textile product e.g. 5, 10, 20, or 50 tee-shirts, but may also be different types of textile products such as a tee-shirt, a shirt, pants, etc.

In some embodiments, the one or more orders specify a quantity of the one or more sub-designs e.g. a quantity of each sub-design to be produced. The one or more orders may further comprise a shape of the sub-design, a textile reference preferably corresponding to a matching reference of a textile roll, and if automatic cut is to be used or not. The shape of the sub-design may be the area or the size of the sub-designs, such as the size of a sleeve in a "small", "medium", or "large" size.

In some embodiments, the one or more orders further specify a printing pattern. The printing pattern may comprise or substantially consist of an image file or a reference to a printing pattern such as an image file stored on a database.

The printing pattern may be specific to a textile product or a sub-design. If the printing pattern of a textile product is separated on several sub-designs, each sub-design may comprise a fraction of the printing pattern of the textile product e.g. if a printing pattern is to be printed on a sleeve and the front of a tee-shirt. The printing pattern may also only be specified for each sub-design. For example, if the printing pattern is a football, it may be printed only on the front of the tee-shirt or both on the front and on the sleeve. For some orders, the textile products do substantially not need to be cut out by the automated textile cutter. This may for example be for orders where the textile products are to be cut out elsewhere or because the sub-designs take up substantially the whole width of the textile roll and thereby may only have to be cut once for each textile product to separate them from each other.

In some embodiments, the first parameter indicates at least a textile roll colour and a textile roll type. The production facility may e.g. comprise a plurality of textile rolls of different colours and textile types. This may e.g. be at least 5, 10, 15, 20, or 50 different colours and types of textile rolls. The textile colour and textile type of the first parameter are then preferably matching at least one of the available textile rolls of the production facility. The textile type may specify a specific type of material, thickness, grain etc. This may e.g. be cotton, silk, wool, flax, hemp etc. The first parameter may be a reference of a textile colour or type, such as a reference number corresponding e.g. to a colour, type, or specific textile roll.

The second parameter indicates whether automatic cutting is to be used for one or more of the textile products and/or sub-designs of an order. An order may therefore comprise textile products that are to be cut, textile products that are not to be cut, and textile products that are partially to be cut i.e. sub-designs that are to be cut and sub-designs that are not to be cut. Some orders may be cut out elsewhere than the production facility e.g. if the cutting is to be done manually or if the customer desires that the order is uncut.

The first and second parameters may be globally defined parameters i.e. parameters that are common for the whole order, but may also be defined for each, some, most, or substantially all of the textile products and/or sub-designs.

In some embodiments, the plurality of textile rolls comprises at least two rolls having the same textile roll type but with different textile roll colours. This may e.g. allow to produce the same sub-design in different base colours and different textile types. A further advantage of this, is for example that a textile product that is to be produced in a specific textile colour i.e. specific base colour of textile with a printing pattern as well, does not need to be coloured entirely by printing. This may e.g. allow to produce the same shape of a sleeve with the same printing pattern e.g. as a football printed both on a white cotton textile roll, on a yellow cotton textile roll, and on a red cotton textile roll, without having to print the base colour of the textile product. By avoiding the printing of the whole textile product and/or sub-design, the production costs may be reduced and the quality of the base colour may be increased. This may further be time saving as only the printing pattern would have to be printed. Textile products having a different base colour but with the same printing pattern and the same textile type may thereby be produced.

In some embodiments, the instructions for automated textile production further comprise an auxiliary parameter.

The generated instructions may comprise parameters such as the textile roll reference, the shape of the sub-designs, the printing pattern, the aggregated sub-designs, whether the sub-designs are to be cut or not, the quantity of sub-designs to be produced for the one or more sub-designs, a reference position of the one or more sub-designs, and an orientation of the one or more sub-designs.

In some embodiments, the auxiliary parameter includes an information carrier, and the method further comprises the step of printing and/or cutting the information carrier on the one or more sub-designs. For example, the information carrier such as a barcode may be printed in connection with a sub-design i.e. not on the sub-design itself but abutting the sub-design. Then in the cutting process, the sub-design may be automatically cut together with the information carrier abutting the sub-design. The information carrier may thereby be printed on an area of textile just outside the area of the sub-design. Alternatively, the information carrier may be printed on the area of the sub-design itself, e.g. if it is printed on an interior side of the sub-design when assembled to a textile product. The information carrier may thereby not be visible from outside when the textile product is in use i.e. as a label. The information carrier may be a machine readable print and/or cut, in order to be identified by the automated textile printer and/or cutter. Alternatively, the information carrier may also be used as an analogue identifier, to be identified by a human being collecting the printed and/or cut sub-designs. In some embodiments, the production facility further comprises an automated textile picker used to pick-up the printed and cut sub-designs. Such a textile picker may also use the information carrier to identify the sub-designs before, while, or after picking them up.

In some embodiments, the aggregation of the one or more sub-designs comprises batching of said one or more sub-designs.

By batching it may be understood to batch one or more sub-designs from one or more orders from one or more customers that are to be printed on the same textile roll. The output of the batching process may be a list of sub-designs having the first and/or second parameter in common, which then are used to generate the instructions for automated textile production.

In some embodiments, the aggregation of the one or more sub-designs comprises nesting of said one or more sub-designs.

On top of the batching of one or more sub-designs, the aggregation may further comprise the nesting of the batched one or more sub-designs. The batching and nesting may be performed at the processing unit, which thereby generates instructions comprising both the batching and nesting of one or more sub-designs. Alternatively, the processing unit may generate instructions comprising only the batching. Then, another processing unit e.g. at the production facility may perform the nesting of the one or more sub-designs that have been batched, generating thereby subsequent instructions.

By nesting it may be understood to improve the positioning of the sub-designs with respect to each other on the textile sheet when printing and/or cutting with the automated textile printer and/or the automated textile cutter, respectively. By nesting the one or more sub-designs, the waste of textile may be reduced by reducing the empty space between the sub-designs when printing and cutting them on the textile sheet. The nesting may be done e.g. according to a brute force principle, a monte-carlo simulation, or according to the paper Eunice Lopez-Camacho, Gabriela Ochoa, Hugo Terashima-Marín, Edmund K. Burke, (2013). An effective heuristic for the two-dimensional irregular bin packaging problem. Annals of Operation Research.

When performing the nesting of the one or more sub-designs, an output of the nesting may be a reference position for each of the sub-designs, or a common reference position for a plurality of sub-designs. By indicating or assigning a reference position to the sub-designs, the automated textile printer and/or the automated textile cutter have an information that may enable to determine where the sub-designs are to be located on the textile sheet, and where to print and/or to cut the sub-designs. The reference position may be a centre position of the sub-design, but may also be an arbitrarily determined reference position of the sub-design such as a corner, a plurality of reference points, or a set of coordinates e.g. of a contour of the sub-designs. The reference position may e.g. be determined from the printing pattern to be printed on the sub-designs or the shape of the sub-design. The reference position may e.g. be indicated as an x,y coordinate. The automated textile printer and/or automated textile cutter may have a stored coordinate system, and the reference position of the sub-designs is preferably compatible with the coordinate system. The generated instructions may i.e. comprise a reference position for each aggregated sub-design. The sub-designs may be rotated in order to improve their nesting. Another output of the nesting process may therefore be an angle of rotation of the sub-designs e.g. with respect to a reference position.

The aggregation of the sub-designs and the generation of instructions may be performed by a processing unit. The processing unit may be configured to receive one or more orders from one or more customers. The processing unit disclosed may be any unit which comprises a unit able to perform basic arithmetic, such as a central processing unit (CPU) or a graphics processing unit (GPU). The processing unit may be communicatively coupled or connected to the automated textile printer and/or cutter. The processing unit may be comprised at the production facility, but may alternatively also be located remotely from the production factory and communicatively coupled to the automated textile printer and/or cutter through a network connection such as a global network as the internet and e.g. as a cloud. The processing unit may also have access to or comprise a data storing unit such as a database comprising e.g. the textile references of the textile rolls, customer profiles, printing patterns, printing files, and customer orders.

In some embodiments, the method further comprises the step of aggregating sub-designs from different orders having the same textile colour and textile type. This may allow to produce all the sub-designs having the same textile colour and the same textile type received from different orders on the same batch, without having to exchange the textile roll in the production facility.

In some embodiments, the method further comprises the step of aggregating sub-designs from different orders so that sub-designs that use automatic cutting are grouped together and sub-designs that do not use automatic cutting are grouped together. This may be advantageous e.g. that the sub-designs that are not to be cut are processed in a faster manner because the cutting process is bypassed. It may also be preferable to aggregate the sub-designs from the same order that are not to be cut. On the other hand, it may be advantageous to aggregate sub-designs having the same textile colour and textile type, and that are to be cut automatically, because the production of several orders at the same time may be rendered more flexible and more effective.

In some embodiments, a connecting textile portion of textile is left between two sub-designs, when automatic cutting is performed. By leaving a connecting textile portion between two cut out sub-designs, the picking of the cut out sub-designs may be facilitated, by e.g. allowing to pick up all the sub-designs of a textile product in a single operation e.g. by only having to pick one sub-design which will pull all the sub-designs connected to that sub-design with it. This contrasts with the known picking methods, where each sub-design must be identified and picked up individually either by a manual operator picking up each sub-designs manually or by an automated picker which identifies and picks up each sub-design manually. This further provides a faster collection of the sub-designs and may avoid errors related to the picking and identification of the sub-designs. This may further avoid errors related to the packing of sub-designs i.e. textile products to the customers or the recipient of the cut out textile products. An improvement and simplification of the logistic may therefore be achieved.

According to a second aspect, the present invention relates to a method for automated textile production using a production facility comprising an automated textile cutter and an automated textile printer comprising a textile roll, a control unit operatively/communicatively coupled to the automated textile printer, the method comprising the steps of:
- obtaining at the control unit instructions generated according to the first aspect of the invention;
- generating a control signal with the control unit to the automated textile printer based on the received instructions.

The instructions may be received from a processing unit by the control unit, or may be sent by the processing unit to the control unit. Alternatively, the control unit and the processing unit may be a common device, whereby the instructions may be generated at that common device, such that the processing unit also acts as control device or the control device also acts as the processing unit. Based on the information from the generated instructions, the control unit may generate a control signal to the automated textile printer. For each sub-design the control signal may e.g. comprise a reference position of the sub-design, a printing pattern reference or image file, a first auxiliary parameter indicating whether automatic cutting is to be performed, a quantity of the sub-designs to be produced, and a second auxiliary parameter indicating a shape reference or image file of the sub-design.

In some embodiments, the control signal is generated based on the textile roll of a plurality of textile rolls in the automated textile printer.

In some situations, it may be advantageous to prioritise the production of sub-designs using the same textile roll as the sub-designs aggregated in instructions generated just before. All the sub-designs using the same textile roll may thereby be produced in one run without changing the textile roll in the automated textile printer.

In some embodiments, the method further comprises the step of printing on a textile sheet with the automated textile printer based on the generated control signal.

In some embodiments, the method further comprises the step of generating operator instructions to an operator of the production facility, based on the received instructions.

An example of an operator instruction may e.g. be to instruct the operator to change the textile roll in the automated textile printer, to start or to stop a printing or cutting process, or to perform a maintenance operation on the automated textile printer or automated textile cutter.

In some embodiments, the method further comprising the steps of:
- generating a control signal with the control unit to the automated textile cutter based on the received instructions;
- cutting the one or more sub-designs on the textile sheet with the automated textile cutter based on the generated control signal to the automated textile cutter;
- assembling the cut one or more sub-designs into the textile product.

The assembling step of the cut one or more sub-designs into the textile product may be performed at the production facility or alternatively another facility where the assembling is done. The assembling may be performed by a seamstress, tailor, or dressmaker.

According to a third aspect, the present invention relates to a data structure for automated textile production generated using a method according to the first aspect of the invention.

The data structure may comprise a configuration of information of the one or more orders from the one or more customers, of the generated instructions, and of the generated control signals. The configuration may indicate what information is comprised in the one or more orders, the generated instructions, and the generated control signals. The data structure may indicate a specific file type and file extension.

According to a fourth aspect, the present invention relates to the use of the data structure according to the third aspect of the invention to generate instructions to an operator of a production facility for automated textile production.

According to a fifth aspect, the present invention relates to a system for automated textile production comprising a production facility including an automated textile cutter and an automated textile printer, the system further comprising a processing unit being configured to receive one or more orders from one or more customers, the one or more orders each specifying one or more textile products comprising one or more sub-designs, where the one or more orders comprise at least a first parameter related to a textile roll of a plurality of rolls, and/or a second parameter indicating whether automatic cutting is to be used, said processing unit being further configured to generate instructions for automated textile production for use in the production facility by aggregating one or more sub-designs, where the aggregation is performed based on the first parameter and/or the second parameter, and a control unit operatively coupled to the processing unit and the automated textile printer, configured to receive the instructions and to generate a control signal to the automated textile printer based on the instructions.

According to a sixth aspect, the present invention relates to a textile product produced by using the method according to the second aspect of the invention.

### BRIEF DESCRIPTION OF THE DRAWINGS

The above and/or additional objects, features and advantages of the present invention will be further elucidated by the following illustrative and non-limiting detailed description of embodiments of the present invention, with reference to the appended drawings, wherein:
Fig. 1 shows a block diagram representing an example of a system for automated textile production, according to an embodiment of the invention.
Fig. 2 shows an example of representations of data structures according to an embodiment of the invention.
Fig. 3 shows an example of the aggregation of one or more orders from one or more customers.
Fig. 4 shows an example of cutting instructions for an automated textile cutter.
Fig. 5 shows a flow chart of a method for generating instructions for automated textile production, according to an embodiment of the invention.

### DETAILED DESCRIPTION

In the following description reference is made to the accompanying figures, which show by way of illustration how the invention may be practiced.

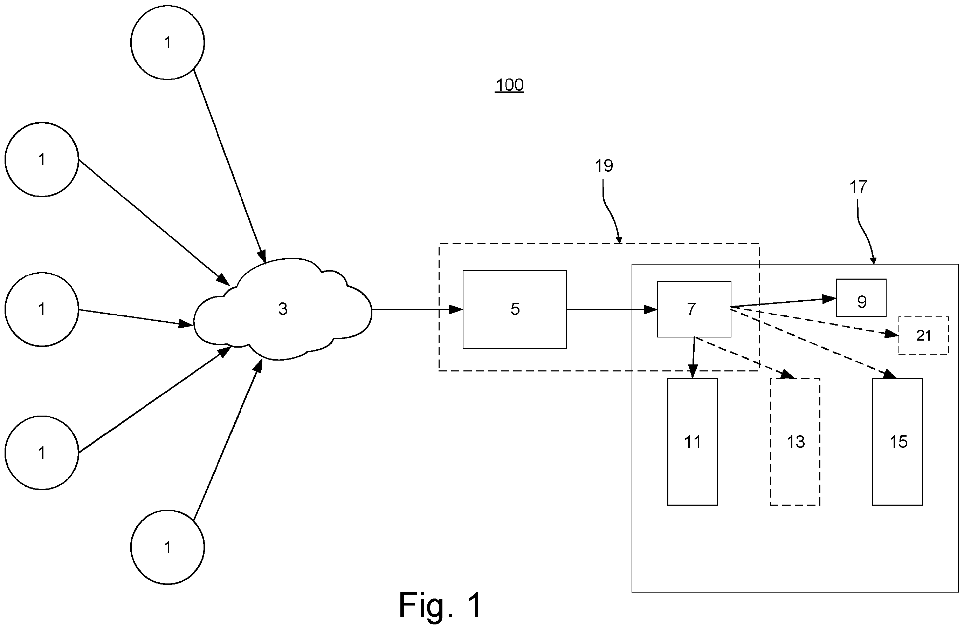

Fig. 1 shows a block diagram of a system 100 for automated textile production comprising a production facility 17 including an automated textile cutter 11 and an automated textile printer 15, the system 100 further comprising a processing unit 5 being configured to receive one or more orders 1 from one or more customers, the one or more orders 1 each specifying one or more textile products comprising one or more sub-designs, where the one or more orders 1 comprise at least a first parameter related to a textile roll of a plurality of rolls (not shown), and/or a second parameter indicating whether automatic cutting is to be used, said processing unit 5 being further configured to generate instructions for automated textile production for use in the production facility by aggregating one or more sub-designs, where the aggregation is performed based on the first parameter and/or the second parameter, and a control unit 7 operatively coupled to the processing unit 5 and the automated textile printer 11, to receive the instructions and to generate a control signal to the automated textile printer 11 based on the instructions. Here the aggregation may comprise the batching of one or more sub-designs, the batching and the nesting of one or more sub-designs at the same unit, or the batching at the processing unit, and the nesting at another processing unit or control unit. In this exemplifying representation, the one or more orders 1 are obtained by the processing unit 5 through a network 3. This network 3 may e.g. be a global network as the internet and e.g. as a cloud. Alternatively, the network 3 may also be a local network at the production facility 17.

Optionally, the processing unit 5 and the control unit 7 are comprised in a common device 19 as indicated by the dotted line, whereby the instructions are generated at that common device 19, such that the processing unit 5 also acts as control device 7 or conversely that the control device 7 also acts as the processing unit 5. The processing unit 5 is communicatively coupled or connected to the automated textile printer 11 and/or cutter 15. In an alternative embodiment, the processing unit 5 is comprised at the production facility 17 e.g. as an independent processing unit or as a common device with the control unit, but may alternatively also be located remotely from the production facility 17 and communicatively coupled to the automated textile printer 11 and/or cutter 15 through a network connection such as a global network as the internet and e.g. as a cloud. The processing unit may also be connected to a plurality of production facilities, and thereby also connected to a plurality of control units at different production facilities, as well as connected to a plurality of automated textile printers and cutters. The processing unit may thereby generate different instructions for the different production facilities, control units, and automated textile printers and cutters.

On top of the batching of one or more sub-designs, the aggregation may further comprise the nesting of the batched one or more sub-designs. The batching and nesting may be performed at the processing unit, which thereby generates instructions comprising both the batching and nesting of one or more sub-designs. Alternatively, the processing unit may generate instructions comprising only the batching. Then, another processing unit e.g. at the production facility or a control unit in the automated textile printer may perform the nesting of the one or more sub-designs that have been batched, generating thereby subsequent instructions.

Optionally, an automated textile dryer 13 is comprised in the production facility 17 after the automated textile printer 11. The textile sheet that has been printed by the automated textile printer 11 is then preferably automatically conveyed to the automated textile dryer 13 in order to cure the printed textile. The textile sheet may then preferably be automatically conveyed to the automated textile cutter 15. Optionally, an operator 9 can transfer manually the textile sheet from the automated textile printer 11 to the automated textile dryer 13 or the automated textile cutter 15, or from the automated textile printer 11 to the automated textile cutter 15.

Optionally, an automated textile picker 21 is comprised in the production facility 17, preferably next to, partially integrated, or fully integrated with the automated textile cutter 15. The automated textile picker 21 is configured to pick up the cut sub-designs after being cut by the automated textile cutter 15.

Optionally, the processing unit 5 or the control unit 7 generates operator instructions to the operator 9. An example of an operator instruction may e.g. be to instruct the operator 9 to transfer the textile sheet from one machine to another, to change the textile roll in the automated textile printer 11, to start or to stop a printing or cutting process, or to perform a maintenance operation on the automated textile printer 11, automated textile dryer 13, or automated textile cutter 15.

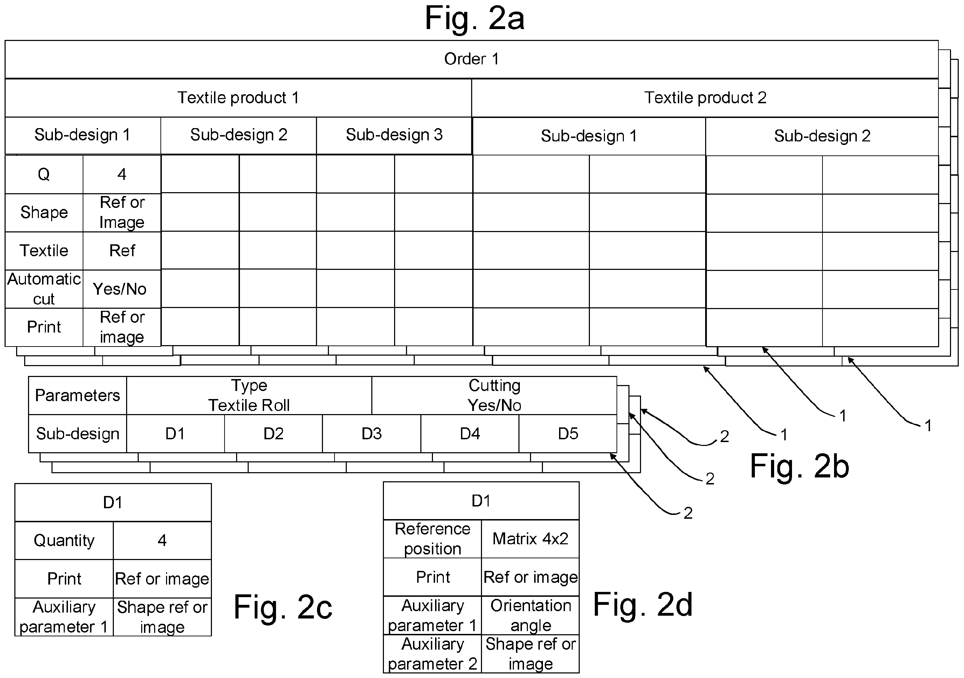

Fig. 2 shows an example of representations of data structures according to an embodiment of the invention. Fig. 2a shows an exemplifying representation of the data structure of one or more orders 1. As can be seen in the example in Fig. 2a, Order 1 comprises two textile products Textile product 1 and Textile product 2, which comprise respectively three sub-designs, Sub-design 1, Sub-design 2, and Sub-design 3, and two sub-designs, Sub-design 1 and Sub-design 2. Sub-design 1 of Textile product 1 comprises a first parameter related to a textile roll of a plurality of rolls, which indicates a reference of a textile and possibly a base colour of the textile roll, a second parameter indicating whether automatic cutting is to be used, auxiliary parameters comprising a shape of the sub-design, which may be a reference to a shape stored on a database or an attached image, a printing pattern which may be a reference to a printing pattern stored on a database or an attached image, and a quantity Q of sub-designs to be produced. The quantity Q to be produced indicates the quantity of sub-designs that is needed to produce a textile product times the quantity of textile products to be produced. For example, it takes two sleeves for each shirt to be produced, so the quantity of sleeves to be produced would be twice the quantity of the textile product. For the sake of simplicity Fig. 2a only shows the set of parameters for Sub-design 1, but all the Sub-designs comprise parameters similarly as what is shown for Sub-design 1.

After the orders 1 have been received, instructions 2 are generated for automated textile production by aggregating one or more sub-designs, where the aggregation is performed based on the first parameter and/or the second parameter. As can be seen on Fig. 2b the data structure of a plurality of instructions 2 have been generated. The exemplifying instruction 2 comprises here a first parameter related to a textile roll of a plurality of rolls obtained from the third line in Fig. 2a, Textile - Ref, and a second parameter indicating whether automatic cutting is to be used obtained from the fourth line in Fig. 2a, and the sub-designs that have been aggregated D1, D2, D3 etc. D1 may e.g. come from order 1, textile product 1, D2 from order 1, textile product 2, and D3 from order 2 and textile product 3 of that order. In Fig. 2c and Fig. 2d two exemplifying representations of the data structures of instructions generated for the sub-design D1 are shown. In Fig. 2c only batching of the one more sub-designs has been performed, and in Fig. 2d both batching and subsequent nesting have been performed. In Fig. 2c a representation of data structures of instructions for D1 is shown. Here the instructions comprise a quantity of the sub-design to produce that comes from the first line Q - 4 from Fig. 2a, a reference or an attached image for the print pattern to be printed which comes from the last line Print - Ref or image of Fig. 2a, and an auxiliary parameter indicating a shape reference or attached image of the sub-design. This is e.g. if the aggregation only comprises batching. When both batching and nesting are performed the processing unit may thereby generate instructions comprising both the batching and nesting of one or more sub-designs. Alternatively, the processing unit may generate instructions comprising only the batching. Then, another processing unit e.g. at the production facility may perform the nesting of the one or more sub-designs that have been batched, generating thereby subsequent instructions

In Fig. 2d another representation of the data structure of D1 is shown where the aggregation both comprises batching and subsequent nesting. The instructions for D1 comprise a reference position in the form of a matrix of 4*2 including e.g. 4 x, y coordinate points. The instructions further comprise a reference or an attached image for the print pattern to be printed, and two auxiliary parameters indicating a shape reference or attached image of the sub-design, and an orientation of the sub-design which is linked to the nesting of the sub-design as well as the reference position mentioned above. This may be generated at the processing unit.

The data structures of Fig. 2c and 2d may also be comprised in the data structure of one common instruction.

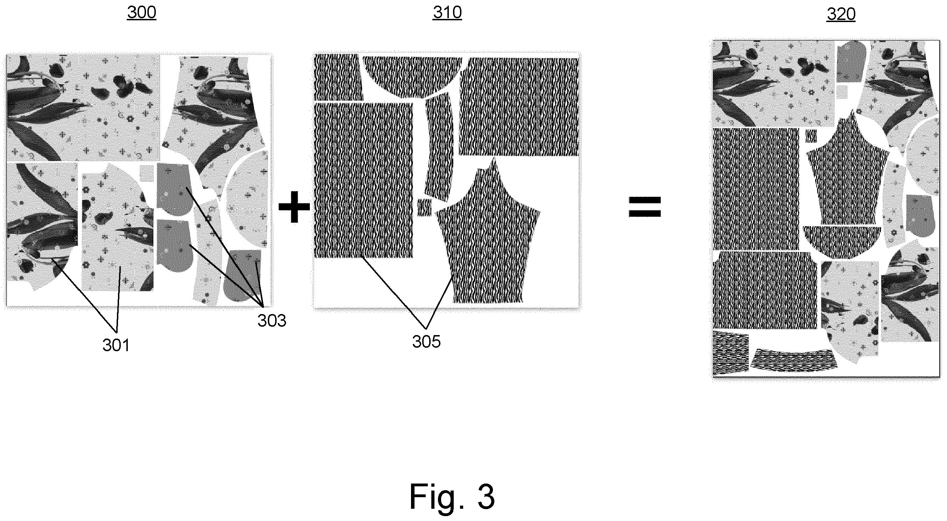

Fig. 3 shows an example of the aggregation of one or more orders 300 and 310 received from one or more customers. As can be seen, order 300 comprises two textile products 301 and 303, comprising respectively seven sub-designs and three sub-designs. Order 310 comprises one textile product 305 comprising seven sub-designs. Here the aggregation comprises both the batching of one or more sub-designs and the nesting of one or more sub-designs. The two orders 300 and 310 comprising in total three textile products, which themselves comprise a plurality of sub-designs that are batched and nested. The output of the batching and nesting can be seen in 320.

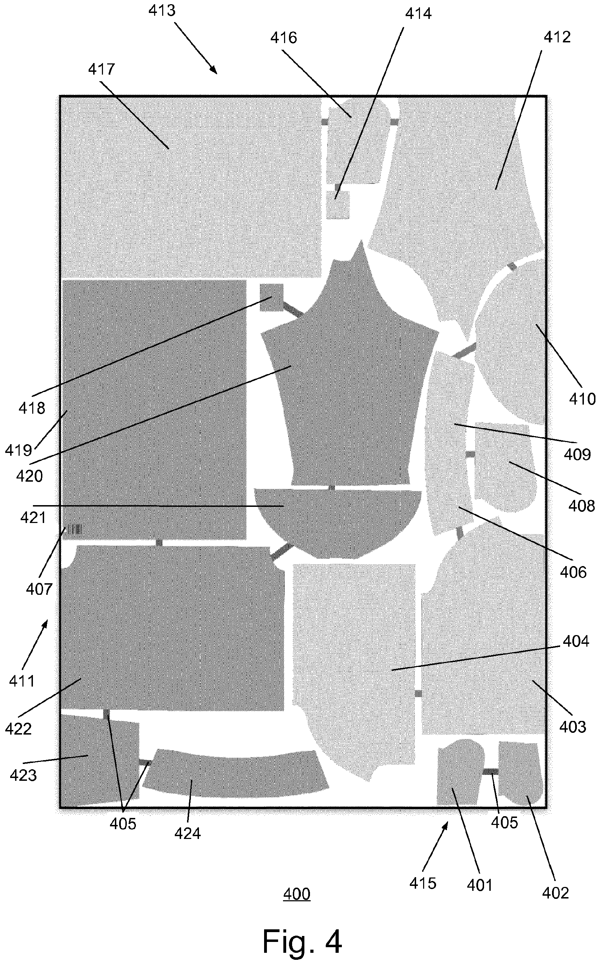

Fig. 4 shows an example of generated instructions 400 for an automated textile cutter. The instructions 400 comprise the aggregation which comprises here both the batching of one or more sub-designs and the nesting of one or more sub-designs. The instructions comprise three textile products 411, 413, and 415. Here textile product 411 comprises seven sub-designs 418, 419, 420, 421, 422, 423, 424 which are connected with connecting textile portions 405. Textile product 413 comprises nine sub-designs 403, 404, 406, 408, 409, 410, 412, 414, 416, and 417 which are connected with connecting textile portions 405. Textile product 415 comprises two sub-designs 401 and 402 which are connected with a connecting textile portion 405. Optionally, the one or more sub-designs 409 comprise an information carrier 407. In this example the information carrier is represented as a barcode 407.

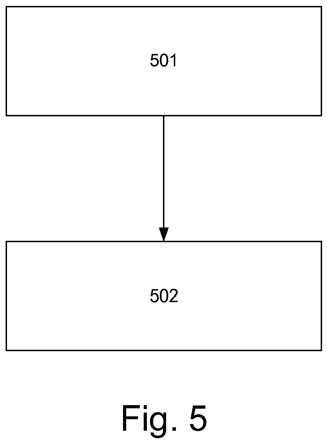

Fig. 5 shows a flow chart of a method for generating instructions for automated textile production for use in a production facility comprising an automated textile cutter and an automated textile printer, where the method comprises the steps of receiving 501 one or more orders from one or more customers, the one or more orders each specifying one or more textile products comprising one or more sub-designs, where the one or more orders comprise at least a first parameter related to a textile roll of a plurality of textile rolls, and/or a second parameter indicating whether automatic cutting is to be used and generating 502 instructions for automated textile production for use in the production facility by aggregating one or more sub-designs, where the aggregation is performed based on the first parameter and/or the second parameter.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A computer implemented method for generating instructions for automated textile production for use in a production facility comprising an automated textile cutter and an automated textile printer, where the method comprises the steps of:
• receiving one or more orders from one or more customers, the one or more orders each specifying one or more textile products comprising one or more sub-designs, where the one or more orders comprise at least a first parameter related to a textile roll of a plurality of textile rolls, and/or a second parameter indicating whether automatic cutting is to be used;
• generating instructions for automated textile production for use in the production facility by aggregating one or more sub-designs, where the aggregation is performed based on the first parameter and/or the second parameter.

2. The method according to claim 1, where the one or more orders further specify a printing pattern.

3. The method according to claim 1 or 2, wherein the first parameter indicates at least a textile roll colour and a textile roll type.

4. The method according to claim 1 to 3, further comprising the step of aggregating sub-designs from different orders having the same textile colour and textile type.

5. The method according to any one of the preceding claims, further comprising the step of aggregating sub-designs from different orders so that sub-designs that use automatic cutting are grouped together and sub-designs that do not use automatic cutting are grouped together.

6. The method according to any one of the preceding claims, wherein the plurality of textile rolls comprises at least two rolls having the same textile roll type but with different textile roll colours.

7. The method according to any one of the preceding claims, wherein the one or more orders specify a quantity of the one or more sub-designs.

8. The method according to any one of the preceding claims, where the aggregation of the one or more sub-designs comprises nesting of said one or more sub-designs.

9. The method according to any of the preceding claims, wherein a connecting textile portion is left between two cut out sub-designs, when automatic cutting is performed.

10. The method according to any of the preceding claims, wherein the instructions for automated textile production further comprise an auxiliary parameter.

11. A method for automated textile production using a production facility comprising an automated textile cutter and an automated textile printer comprising a textile roll, and a control unit operatively/communicatively coupled to the automated textile printer, the method comprising the steps of:
• obtaining at the control unit instructions generated according to any one of the preceding claims;
• generating a control signal with the control unit to the automated textile printer based on the received instructions.

12. The method according to claim 11, where the control signal is generated based on the textile roll of a plurality of textile rolls in the automated textile printer.

13. The method according to claim 11 or 12, further comprising the step of:
• printing on a textile sheet with the automated textile printer based on the generated control signal.

14. The method according to claim 11-13, further comprising the steps of:
• generating a control signal with the control unit to the automated textile cutter based on the received instructions;
• cutting the one or more sub-designs on the textile sheet with the automated textile cutter based on the generated control signal to the automated textile cutter;
• assembling the cut one or more sub-designs into the textile product.

15. A data structure for automated textile production generated using a method according to claim 1 to 10.

16. A system for automated textile production comprising a production facility including an automated textile cutter and an automated textile printer, the system further comprising a processing unit being configured to receive one or more orders from one or more customers, the one or more orders each specifying one or more textile products comprising one or more sub-designs, where the one or more orders comprise at least a first parameter related to a textile roll of a plurality of rolls, and/or a second parameter indicating whether automatic cutting is to be used, said processing unit being further configured to generate instructions for automated textile production for use in the production facility by aggregating one or more sub-designs, where the aggregation is performed based on the first parameter and/or the second parameter, and a control unit operatively coupled to the processing unit and the automated textile printer, to receive the instructions and to generate a control signal to the automated textile printer based on the instructions.

17. A textile product produced by using the method according to claim 11 to 14.
